# EUROPEAN PATENT SPECIFICATION

(11) **EP 1 837 273 B1**
(45) Date of publication and mention of the grant of the patent: **12.05.2010**
(21) Application number: 07005777.3
(22) Date of filing: 21.03.2007
(51) Int. Cl.: B62J 6/04, B62J 15/00

(54) **Splashguard section with a luminous effect, in particular for bicycle**
Spritzblechabschnitt mit Leuchteffekt, insbesondere für Fahrräder
Section de garde-boue dotée d'un effet lumineux, en particulier pour bicyclette

(30) Priority: 24.03.2006 IT VI20060082
(43) Date of publication of application: 26.09.2007
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Bettello, Pietro

(56) References cited:
- DE-U1- 20 315 583
- US-A- 3 941 994

## Description

The present finding relates to a splashguard section with a luminous effect, in particular for bicycle application, specifically for use on bicycles.

It is commonly known that for the electrical systems mounted on motorbicycles and bicycles various types of retro reflectors or tail lights are applied to mudguards, and possibly connected to the electrical system.

In particular, in reference to rear luminous devices on bicycles, these are generally in the form of tail lights realised in a synthetic transparent material, initially attached to the mudguard by means of screws, and successively connected to the electrical system.

Although this type of solution is the most common, it does present certain drawbacks, mainly related to installation time which inevitably provokes an increase in the cost of the finished product. The need for repeating a range of operations such as inserting screws into the mudguard, fixing the screw to a bolt, followed by the tightening action, may seem unimportant, however, the need to repeat these operations several times has strong repercussions on finished product assembly times, and consequently, on the production cost.

Another drawback concerns the appearance of the solution adopted up to this time, since metal screws are necessary, and this can lead to rusting or unsightly oxidation. Furthermore, when installed, the luminous devices are often not well integrated with the surrounding gasket, and seem to be a separate element, sometimes protruding too far, to the point that they can even be a hindrance at times.

In an attempt to overcome these drawbacks, mudguards have been produced with incorporated tail lights, which are applied with screws or rivets to the rear mudguard of the bicycle and then connected to the electrical system. In actual fact, a chamber is defined within the structure of the splashguard, generally made of some synthetic material, and a luminous source is housed in the chamber, and protected by a transparent cover. The documents US-A-3941994 and DE 20315583 U1 can be considered as the most relevant state of the art.

In reality, these splashguards with tail lights only partially resolve the problems described above. In particular, it should be noted that screws or other metal components are still required for installation, and if for some reason it is decided not to mount the tail light, then the whole splashguard model must be changed, since the tail light is an integral part of the splashguard structure, and therefore the two components must necessarily be used together.

The aim of this invention is to resolve the problems described above, by realising a splashguard with a luminous effect, in particular for bicycle application, which is simple and rapid to assemble and which does not require the use of screws.

In the context of the task described herein, a particular aim of the invention is to realise a splashguard section with a luminous effect, that is well-integrated with the rest of the gasket, also presenting the advantageous characteristics of the splashguard profile described in the patent specification with application number EP-A-1595776, in the name of the Applicant of the present invention.

Another aim of the invention is to realise a splashguard section with a luminous effect, wherein the luminescent element can be separated from the splashguard structure, thus making it possible to use the splashguard separately.

By no means the last aim of the invention, is to produce a splashguard section with a luminous effect that can be manufactured with competitive costs, resulting advantageous from a purely economical viewpoint.

The task described above, as well as the aims proposed and others which will be made more apparent further on, are achieved with a splashguard section with a luminous effect, particularly for bicycle application comprising a support element that can be removably fixed to a mudguard, by means of a snap-on attachment, that operates while in use, and defining a splashguard fin, there also being a luminous source associated with said support element, characterised in that it comprises an insertion attachment means to removably fix said luminous source to said support element, said luminous source being associated by a sliding action with said support element.

Further characteristics and advantages will be made more apparent from the description of a preferred, but not exclusive, embodiment of a splashguard section with a luminous effect according to the invention, illustrated as a non limiting example, in the appended drawings wherein:

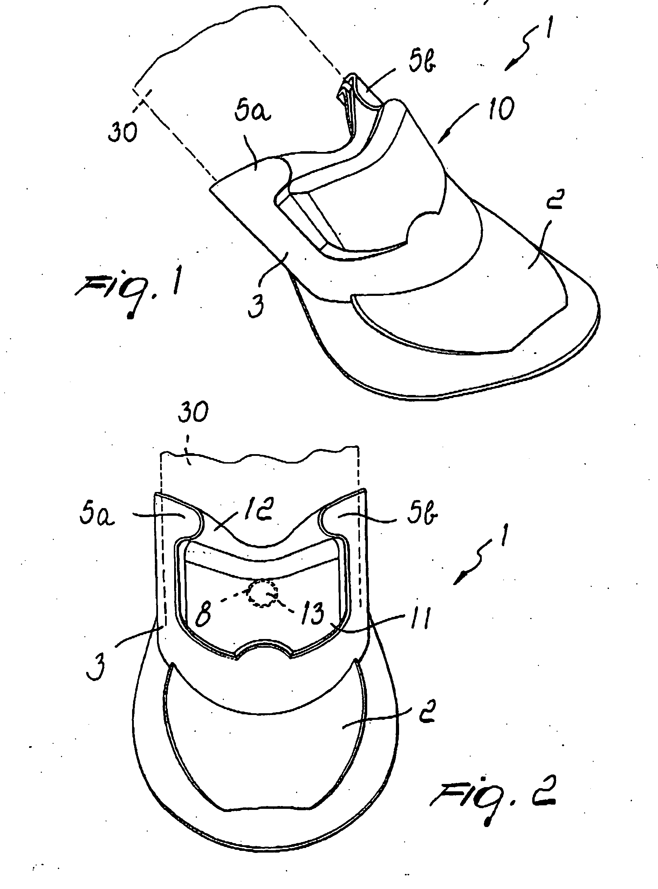

Figure 1 is a view in perspective of a splashguard section with a luminous effect according to the invention;
Figure 2 is a plane view of a splashguard section with a luminous effect according to the invention;

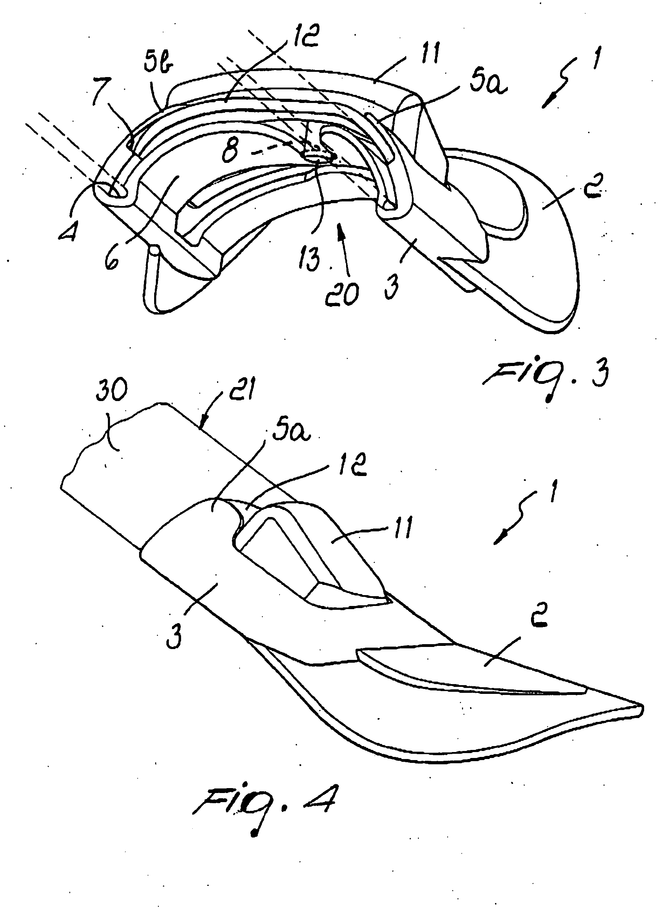

Figure 3 is a further view in perspective of a splashguard section with a luminous effect according to the invention;
Figure 4 is a side view of a splashguard section with a luminous effect according to the invention;

With reference to the figures described above, the splashguard section with a luminous effect, in particular for bicycle application, is identified throughout by the numeral 1, and comprises a splashguard fin 2 combined in a single unit with a support element 3, advantageously realised in a moulded synthetic material.

In the support element 3, conceived to slide for engagement to a bicycle mudguard 30 of standard size, is an internal face set in the under-surface part 20 of the mudguard 30, and an external face on the top surface part 21 of the mudguard 30, which represents the part normally visible to the user. The support element 3 comprises a guide 4, with a transversal section substantially mated to the transversal section of the mudguard 30, and at least partially defined by an arched element 6 obtained on the internal face of the mudguard 30, which permits the splashguard section with a luminous effect 1, to be attached to the mudguard 30 by means of a sliding action.

A snap-on means of engagement, not shown in the appended figures, and more specifically composed of a pair of teeth defined internally in the guide 4, and of a projection defined in the centre of the guide, permit the engagement of the splashguard section with a luminous effect 1, to be attached with an insertion action to the mudguard 30, when in use.

The splashguard section with a luminous effect 1 is also mounted with a luminous source 10 fixed in a removable manner to the support element 3, and composed mainly of a reflex reflector shell 11, at least partially transparent, with a specific shape, and substantially empty internally.

According to the invention, the splashguard section with a luminous effect 1 comprises a means of engagement through insertion, conceived to removably and slidably associate the luminous source 10 to the external face of the support element 3, and to maintain it in the correct position while it is in use.

More specifically, the insertion engagement means are composed of a protruding rim 12, defined around the whole perimeter of the reflex reflector shell 11, and a housing 7, having a form that is substantially complementary to that of the protruding rim 12, defined inside the guide 4 set on the external face of the support element 3.

The sliding action of the reflex reflector shell 11 in relation to the support element 3, can be arrested by means of a fixing pin 13, set in the centre of the reflex reflector shell 11, in order to interact with a hole 8 set in the mudguard 30. The action of the fixing pin 13 is also aided by a pair of small plates 5a and 5b, combined in a single unit to the support element 3 so that it partially defines the housing 7, and which, as well as maintaining the reflex reflector shell 11 in contact with the mudguard 30 through a pressing action while in use, also interacts with the mudguard to prevent the sliding action.

The effectiveness of the luminous source 10 can be increased by the presence of at least one electric bulb, or more simply, of at least a LED, not shown in the figures, contained inside the reflex reflector shell 11, and connected to the electrical system of the bicycle.

The splashguard section according to the invention operates as follows.

Once the reflex reflector shell 11 has been placed on the top surface part 21 of the mudguard 30, so that the fixing pin 13 is aligned with the hole 8, the guide 4 of the support element 3 is slidably attached onto the mudguard 30. The possibility of inserting the mudguard 30 into the guide 4 is guaranteed by the flexibility of the splashguard section with a luminous effect 1, and in particular, by the flexibility of the small plates 5 when they come into contact with the reflex reflector shell 11 during the insertion action. This is achieved by adapting to the shape until it has been surpassed by the sliding action, followed by the positioning on the protruding rim 12, after a portion of the rim has been inserted into the housing 7.

To complete the installation it is sufficient to slightly increase the pressure of the mudguard into the guide 4 until the snap-on attachment means is fixed to the mudguard 30.

The operations described above can be performed in reverse order, beginning by attaching the support element 3 to the mudguard 30, until the snap-on means are inserted. At this point, if the luminous source 10 is not required, no further operations are necessary, otherwise the support element 3 is simply united with the reflex reflector shell 11, bending the plates 5 and sliding the protruding rim 12 into the housing 7 until the fixing pin 13 is inserted into the hole 8.

In both cases, the installation is completed by connecting the electric bulb or LED which may be present inside the reflex reflector shell 11 to the electrical system on the bicycle.

Practically speaking, it can be seen how the splashguard section with a luminous effect 1, particularly for bicycle application, according to the invention, achieves the established aim, since it is simple and rapid to assemble, and does not require the use of screws.

Furthermore, although the splashguard section with a luminous effect 1 according to the invention is simple and economical to produce, it presents the specific advantages of the splashguard section described in specification EP-A-1595776, whose inventor is the same as the present application, while being usable in a manner separate from the luminescent element.

The splashguard section with a luminous effect, in particular for bicycle application conceived in this manner can be subject to numerous changes and variants while remaining within the concept of the invention; furthermore, all the components can be replaced by others technically equivalent.

Practically speaking, as long as they are compatible with their specific use, the materials employed, as well as the relative sizes and shapes, can be of any type according to necessity and technical state of the art.

## Claims

1. Splashguard section (1) with a luminous effect, in particular for bicycle application comprising a support element (3) that can be removably attached to a mudguard (30), by snap-on engagement means, operating when in use and defining a splashguard fin (2), a luminous source (10) morever being provided associated with said support element (3), wherein said support element (3) comprises a means of engagement through insertion to removably engage said luminous source (10) with said support element (3), said luminous source being slidably fixed to said support element (3).

2. Splashguard section with a luminous effect, according to the previous claim **characterised in that** said support element (3) defines an internal face and an external face opposite each other, said internal face being set in the under surface (20) of said mudguard (30), and said external face being set in the top surface (21) of said mudguard.

3. Splashguard section with a luminous effect, according to one or more of the previous claims **characterised in that** said luminous source (10) comprises a reflex reflector shell (11), at least partially transparent and removably attachable to said external face of said support element (3).

4. Splashguard section with a luminous effect, according to one or more of the previous claims **characterised in that** said engagement through insertion means comprise a protruding rim (12) defined on the whole perimeter of said reflex reflector shell (11) to slidably associate it to said support element (3).

5. Splashguard section with a luminous effect, according to one or more of the previous claims **characterised in that** said support element (3) comprises a guide having a transversal section substantially complementary to the transversal section of said mudguard (30), to slidably associate said support element to said mudguard when it is in use.

6. Splashguard section with a luminous effect, according to one or more of the previous claims **characterised in that** said engagement through insertion means comprise a housing (7) with a form that is substantially complementary with the form of the protruding rim (12), said housing being defined on said support element inside said guide (14) and at said external face of said support surface, in order to slidably associate said reflex reflector shell (11) with said support element.

7. Splashguard section with a luminous effect, according to one or more of the previous claims **characterised in that** said engagement through insertion means comprise at least one fixing pin (13), defined inside said reflex reflector shell (11) for insertion into a hole (8) defined on said mudguard, when it is in use.

8. Splashguard section with a luminous effect, according to one or more of the previous claims **characterised in that** said engagement through insertion means comprise at least a pair of small plates (5), connected in a single unit to said support element, said plates (5) partially defining said housing (7), and being conceived to maintain the contact between said reflex reflector (11) with said mudguard (30) and to block the relative sliding action, when it is in use.

9. Splashguard section with a luminous effect, according to one or more of the previous claims **characterised in that** said luminous source (10) comprises at least one electric bulb housed inside said reflex reflector shell (11), and can be connected to a specific electrical system.

10. Splashguard section with a luminous effect, according to one or more of the previous claims **characterised in that** said luminous source (10) comprises at least one LED housed inside said reflex reflector shell (11) and can be connected to a specific electrical system.

## Patentansprüche

1. Spritzblechabschnitt (1) mit einem Leuchteffekt, insbesondere zur Anwendung an einem Fahrrad, mit einem Halteelement (3), welches abnehmbar mittels einer Schnappverbindung an einem Schutzblech (30) befestigt werden kann, welches im Betrieb wirksam ist und eine Schutzblechflosse (2) definiert, wobei weiterhin eine dem Halteelement (3) zugehörige Leuchtquelle (10) vorgesehen ist, wobei das Halteelement (3) ein Mittel zum Einrasten durch Einschieben zum abnehmbaren Einrasten der Leuchtquelle (10) an dem Halteelement (3) umfasst, wobei die Leuchtquelle (10) verschiebbar an dem Halteelement (3) befestigt ist.

2. Spritzblechabschnitt mit einem Leuchteffekt nach dem vorstehenden Anspruch, **dadurch gekennzeichnet, dass** das Halteelement (3) eine Innenseite und eine dieser gegenüber liegende Außenseite definiert, wobei die Innenseite in der unten liegenden Oberfläche (20) des Schutzblechs (30) und die Außenseite in der oberen Oberfläche des Schutzblechs (30) liegt.

3. . Spritzblechabschnitt mit einem Leuchteffekt nach einem oder mehreren der vorstehenden Ansprüche, **dadurch gekennzeichnet, dass** die Leuchtquelle (10) eine Spiegelreflektorhülle (11) umfasst, die wenigstens teilweise transparent ist und abnehmbar an der Außenseite des Halteelements (3) angebracht werden kann.

4. Spritzblechabschnitt mit einem Leuchteffekt nach einem oder mehreren der vorstehenden Ansprüche, **dadurch gekennzeichnet, dass** das Mittel zum Einrasten durch Einschieben einen am gesamten Umfang der Spiegelreflektorhülle (11) ausgebildeten vorstehenden Rand (12) zum verschiebbaren Anbringen derselben an dem Halteelement (3) umfasst.

5. Spritzblechabschnitt mit einem Leuchteffekt nach einem oder mehreren der vorstehenden Ansprüche, **dadurch gekennzeichnet, dass** das Halteelement (3) eine Führung mit einem Querabschnitt umfasst, der im Wesentlichen komplementär zu dem Querabschnitt des Schutzblechs (30) ausgebildet ist, zum verschiebbaren Anbringen des Halteelements an dem Schutzblech im Betrieb.

6. Spritzblechabschnitt mit einem Leuchteffekt nach einem oder mehreren der vorstehenden Ansprüche, **dadurch gekennzeichnet, dass** das Mittel zum Einrasten durch Einschieben ein Gehäuse (7) von einer Form umfasst, die im Wesentlichen komplementär zur Form des vorstehenden Randes (12) ist, wobei das Gehäuse an dem Halteelement innerhalb der Führung (14) und an der Außenfläche der Haltefläche definiert ist, zum verschiebbaren Anbringen der Spiegelreflektorhülle (11) an dem Halteelement.

7. Spritzblechabschnitt mit einem Leuchteffekt nach einem oder mehreren der vorstehenden Ansprüche, **dadurch gekennzeichnet, dass** das Mittel zum Einrasten durch Einschieben wenigstens einen Fixierstift (13) umfasst, der innerhalb der Spiegelreflektorhülle (11) definiert ist, zum Einschieben in ein an dem Schutzblech (30) definiertes Loch (8) im Betrieb.

8. Spritzblechabschnitt mit einem Leuchteffekt nach einem oder mehreren der vorstehenden Anspruche, **dadurch gekennzeichnet, dass** das Mittel zum Einrasten durch Einschieben wenigstens ein Paar kleiner Platten (5) umfasst, die partiell das Gehäuse (7) definieren und dazu ausgelegt sind, den Kontakt zwischen der Spiegelreflektorhülle (11) und Schutzblech (30) aufrecht zu erhalten und die relative Gleitbewegung im Betrieb zu blockieren.

9. Spritzblechabschnitt mit einem Leuchteffekt nach einem oder mehreren der vorstehenden Ansprüche, **dadurch gekennzeichnet, dass** die Leuchtquelle (10) wenigstens eine innerhalb der Spiegelreflektorhülle (11) angeordnete elektrische Glühbirne umfasst und mit einem spezifischen elektrischen System verbunden werden kann.

10. Spritzblechabschnitt mit einem Leuchteffekt nach einem oder mehreren der vorstehenden Ansprüche, **dadurch gekennzeichnet, dass** die Leuchtquelle (10) wenigstens eine innerhalb der Spiegelreflektorhülle (11) angeordnete LED umfasst und mit einem spezifischen elektrischen System verbunden werden kann.

## Revendications

1. Section anti-éclaboussures (1) avec effet lumineux, en particulier pour application sur une bicyclette, comprenant un élément de support (3) que l'on peut fixer de manière amovible à un garde-boue (30), par un moyen d'engagement par encliquetage, fonctionnant lors de son usage et définissant une ailette anti-éclaboussures (2), une source lumineuse (10) étant en outre mise en oeuvre associée audit élément de support (3), dans laquelle ledit élément de support (3) comprend un moyen d'engagement par insertion pour engager de manière amovible ladite source lumineuse (10) sur ledit élément de support (3), ladite source lumineuse étant fixée à coulissement audit élément de support (3).

2. Section anti-éclaboussures avec effet lumineux selon la revendication précédentes, **caractérisée en ce que** ledit élément de support (3) définit une face interne et une face externe opposées l'une à l'autre, ladite face interne étant fixée dans la surface intérieure (20) dudit garde-boue (30) et ladite face externe étant fixée dans la surface supérieure (21) dudit garde-boue.

3. Section anti-éclaboussures avec effet lumineux selon une ou plusieurs des revendications précédentes, **caractérisée en que** ladite source lumineuse (10) comprend une parabole de rétroréflecteur (11), au moins en partie transparente et pouvant être fixée de manière amovible a ladite face externe dudit élément de support (3).

4. Section anti-éclaboussures avec effet lumineux selon une ou plusieurs des revendications précédentes, **caractérisée en ce que** ledit engagement par des moyens d'insertion comprend un rebord saillant (12) défini sur l'ensemble du périmètre de ladite parabole de rétroréflecteur (11) pour l'associer à coulissement audit élément de support (3).

5. Section anti-éclaboussures avec effet lumineux selon une ou plusieurs des revendications précédentes, **caractérisée en ce que** ledit élément de support (3) comprend un guide ayant une section transversale sensiblement complémentaire de la section transversale dudit garde-boue (30) pour associer à coulissement ledit élément de support audit garde-boue lorsqu'il est en usage.

6. Section anti-éclaboussures avec effet lumineux selon une ou plusieurs des revendications précédentes, **caractérisée en ce que** ledit engagement par des moyens d'insertion comprend un logement (7) avec une forme qui est sensiblement complémentaire de la forme du rebord saillant (12), ledit logement étant défini sur ledit élément de support à l'intérieur dudit guide (14) et sur ladite face externe de ladite surface de support pour associer à coulissement ladite parabole de rétroréflecteur (11) audit élément de support.

7. Section anti-éclaboussures avec effet lumineux selon une ou plusieurs des revendications précédentes, **caractérisée en ce que** ledit engagement par des moyens d'insertion comprend au moins une broche de fixation (13), définie à l'intérieur de ladite parabole de rétroréflecteur (11) à insérer dans un trou (8) défini sur ledit garde-boue, lorsqu'il est en usage.

8. Section anti-éclaboussures avec effet lumineux selon une ou plusieurs des revendications précédentes, **caractérisée en ce que** ledit engagement par des moyens d'insertion comprend au moins une paire de petites plaques (5), raccordées en une seule unité audit élément de support, lesdites plaques (5) définissant partiellement ledit logement (7) et étant conçues pour maintenir le contact entre ledit rétroréflecteur (11) et ledit garde-boue (30) et pour bloquer l'action de coulissement relatif lorsqu'il est en usage.

9. Section anti-éclaboussures avec effet lumineux selon une ou plusieurs des revendications précédentes, **caractérisée en ce que** ladite source lumineuse (10) comprend au moins une ampoule électrique logée à l'intérieur de ladite parabole de rétroréflecteur (11) et qui peut être connectée à un système électrique spécifique.

10. Section anti-éclaboussures avec effet lumineux selon une ou plusieurs des revendications précédentes, **caractérisée en ce que** ladite source lumineuse (10) comprend au moins une DEL logée à l'intérieur de ladite parabole de rétroréflecteur (11) et qui peut être connectée à un système électrique spécifique.
